# EUROPEAN PATENT SPECIFICATION

(11) **EP 2 624 391 B1**
(45) Date of publication and mention of the grant of the patent: **01.07.2015**
(21) Application number: 13153118.8
(22) Date of filing: 29.01.2013
(51) Int. Cl.: H02G 3/14, H02G 3/12

(54) **Assembly of an electric wiring and an auxiliary piece for building up the electric wiring**
Montage einer Elektroverdrahtung und ein Hilfsteil zum Aufbau der Elektroverdrahtung
Assemblage d'un câblage électrique et pièce auxiliaire permettant de construire le câblage électrique

(30) Priority: 01.02.2012 NL 2008215
(43) Date of publication of application: 07.08.2013
(73) Proprietor: ABB B.V., 6716 AA Ede (NL)
(72) Inventor: Renckens, Thomas Philippus, 3742 ND Baarn (NL); Koppenol, Arnoldus, 6713 KB Ede (NL)
(74) Representative: Geurts, Franciscus Antonius

(56) References cited:
- EP-A1- 2 187 492
- EP-A2- 0 473 042
- WO-A1-95/05022
- WO-A2-2008/098263
- DE-U1- 8 115 220
- DE-U1- 29 821 419
- GB-A- 2 390 760

## Description

### BACKGROUND OF THE INVENTION

The invention relates to an assembly of an electric wiring and an auxiliary piece and a method for by means of the auxiliary piece building up the electric wiring in a building.

A known method for building up an electric wiring in a building comprises the steps of making a hole in a wall, placing an installation box in the hole, bringing the electric wirings of the building into the installation boxes, arranging installation material in the installation box and connecting the installation material to the electric wirings, finishing the front side of the installation material by means of a front plate that abuts the front side of the wall. However, from an aesthetic point of view it is desirable that the front plate projects as little as possible relative to the wall, so that the front plate seems to be substantially flush with the wall. However, this is not always possible, as a certain minimum thickness is required for accommodating the electric or mechanical elements of the installation material.

DE 81 15 220 U1 discloses an assembly of electric wiring according to the pre-amble of claim 1 and a method for building up an electric wiring according to the pre-amble of claim 13.

It is an object of the invention to provide an assembly of an electric wiring and an auxiliary piece for building up the electric wiring in a building, with which the distance over which the front plate projects relative to the wall can be reduced.

### SUMMARY OF THE INVENTION

According to a first aspect the invention provides an assembly according to claim 1. Relative to the finishing layer, the installation material can be accommodated in the free volume so as to be recessed in the direction of the unfinished front side of the wall. The mounting plate is arranged on the circumferential edge of the installation box or a mounting ring protruding therefrom so as to be offset relative to the finishing layer. As the mounting plate is offset from the front side of the finishing layer the distance over which the installation material protrudes can be reduced, as a result of which the front plate can be mounted more flatly against the front side of the finishing layer. In that way the distance over which the installation material projects relative to the finishing layer can be reduced, as a result of which the front plate placed over it can be disposed more level or in flush mounting on the finishing layer.

In one embodiment in the placed condition of the auxiliary piece, the insert part connects to the installation box in a clamping manner. In that way the insert part can reliably be secured in the installation box, as a result of which the position of the clearance part and the free volume can be defined better.

In one embodiment the installation box is provided with fixing bushes extending inward from the circumferential wall into the inner space, wherein the insert part is provided with recesses for accommodation of the fixing bushes. Due to the recesses the shape of the insert part can be adapted to the shape of the inner space of the installation box.

In one embodiment on the front side of the auxiliary piece the clearance part is provided with a breaking surface, wherein the breaking surface in broken condition provides an engagement opening in the clearance part with an engagement edge accessible from the front side of the auxiliary piece. The engagement edge can make the removal of the auxiliary piece from the finishing layer easier, as the electrician is able to exert force on the auxiliary piece via the engagement edge.

In one embodiment, at the location of the installation box, the auxiliary piece is provided with an electric signal element. The signal elements can make it possible to determine the position of the auxiliary piece, for instance by means of a detection tool, even if the auxiliary piece is covered by the finishing layer.

In one embodiment the signal element is disposed at the location of the breaking surface. The signal elements can make it possible to determine the position of the breaking surface, for instance by means of a detection tool, even if the breaking surface is covered by the finishing layer.

In one embodiment the finishing layer to be applied has a finishing thickness, wherein the thickness of the clearance part and thus the depth of the free volume substantially equals the thickness of the finishing layer. By adjusting the thickness of the clearance part to the thickness of the finishing layer a situation can be achieved in which after applying the finishing layer the clearance part is substantially level with the finishing layer that has been applied around the auxiliary piece on the unfinished front side of the wall. Finishing material that is inadvertently spilled on the auxiliary piece can thus be minimized, as a result of which the removal of the auxiliary piece costs less effort and results in less risk of damaging the surrounding finishing material.

In one embodiment the clearance part and the insert part are individual elements of the auxiliary piece that are coupled to each other by means of a coupling that can be released. The insert part and the clearance part can thus be disposed and removed independent from each other.

In one embodiment the clearance part and the insert part are hollow shell members that connect to each other, wherein the clearance part and the insert part in the coupled condition jointly form the free volume. By using two shell members a volume can be formed and be kept free from the finishing layer using relatively little material.

In one embodiment the clearance part comprises a front wall and a circular first coupling edge facing the insert part, wherein the insert part has a rear wall and a circular second coupling edge facing the clearance part, wherein the coupling edges in the coupled condition engage onto each other and wherein the front wall, the coupling edges and the rear wall jointly form the free volume. The coupling edges can effect a coupling between the clearance part and the insert part.

In one embodiment the clearance part and/or insert part are made of synthetic material, preferably polyester, most preferably polyethylene terephthalate of polystyrene. The polyethylene terephthalate (PET) or polystyrene (PS) material can provide sturdiness to the shell members and moreover is recyclable. In addition the finishing material adheres poorly to the above-mentioned materials, as a result of which the auxiliary piece detaches easily.

In one embodiment the clearance part and/or insert part are formed by thermoplastic deformation. In that way the production costs can be kept low in comparison with for instance manufacturing by means of injection moulding.

In one embodiment the clearance part is substantially rectangular. The free volume can thus be adapted to a substantially rectangular front plate.

In one embodiment the clearance part fully covers the primary opening of the box body. By keeping the primary opening free it can be counteracted that finishing material ends up in the inner space of the installation box.

In one embodiment the clearance part around the hole in the wall abuts the unfinished front side of the wall. In that way it can be counteracted that the finishing layer penetrates into the holes or the inner space of the installation box.

In one embodiment the clearance part extends outward beyond the circumferential wall of the installation box. In that way it can be counteracted that the finishing layer penetrates into the inner space of the installation box.

In one embodiment the wall comprises a multiple of holes in which a multiple of installation boxes has been accommodated, wherein the insert part comprises a multiple of insert projections that in the placed condition of the auxiliary piece has been disposed in the primary openings of the multiple of installation boxes. With the above-mentioned insert part a free volume can be kept extending straight in front of the multiple of installation boxes.

According to a second aspect the invention provides a method according to claim 13. The mounting plate is arranged on the circumferential edge of the installation box or a mounting ring protruding therefrom so as to be offset relative to the finishing layer. As the mounting plate is offset from the front side of the finishing layer the distance over which the installation material protrudes can be reduced, as a result of which the front plate can be mounted more flatly against the front side of the finishing layer. In that way the distance over which the installation material projects relative to the finishing layer can be reduced, as a result of which the front plate placed over it can be disposed more level or in flush mounting on the finishing layer.

GB 2 390 760 discloses a protective lid for an electrical back box, for fitting into the open top of the electrical back box per se.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### SHORT DESCRIPTION OF THE DRAWINGS

The invention will be elucidated on the basis of a number of exemplary embodiments shown in the attached schematic drawings, in which:
figure 1 shows an isometric view of an assembly of an electric wiring and an auxiliary piece for building up the electric wiring in a building according to the first embodiment of the invention;
figures 2, 3, 4A, 5, 6, 7, and 8A show depictions of the steps of a method for by means of the auxiliary piece according to figure 1 building up the electric wiring in the building;
figures 4B en 8B show cross-sections according to the lines IVB-IVB and VIIIB-VIIIB in figures 4A and 8A, respectively;
figures 9 and 10 show depictions of a few steps of an alternative method for by means of the auxiliary piece according to figure 1 building up an electric wiring in the building; and
figure 11 shows an isometric view of an electric wiring in a building according to a second embodiment of the invention.

### DETAILED DESCRIPTION OF THE DRAWINGS

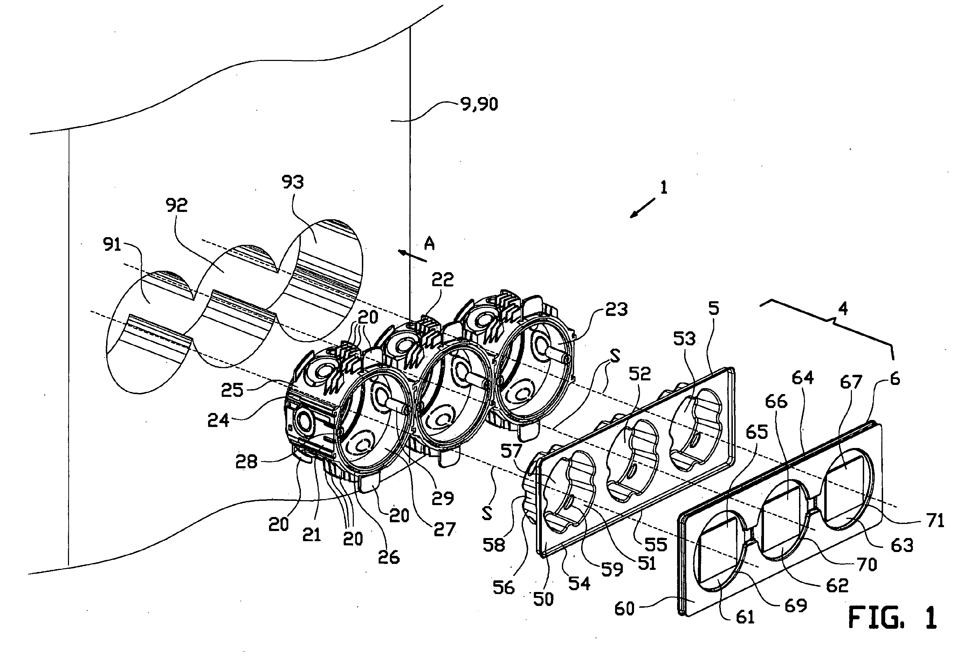

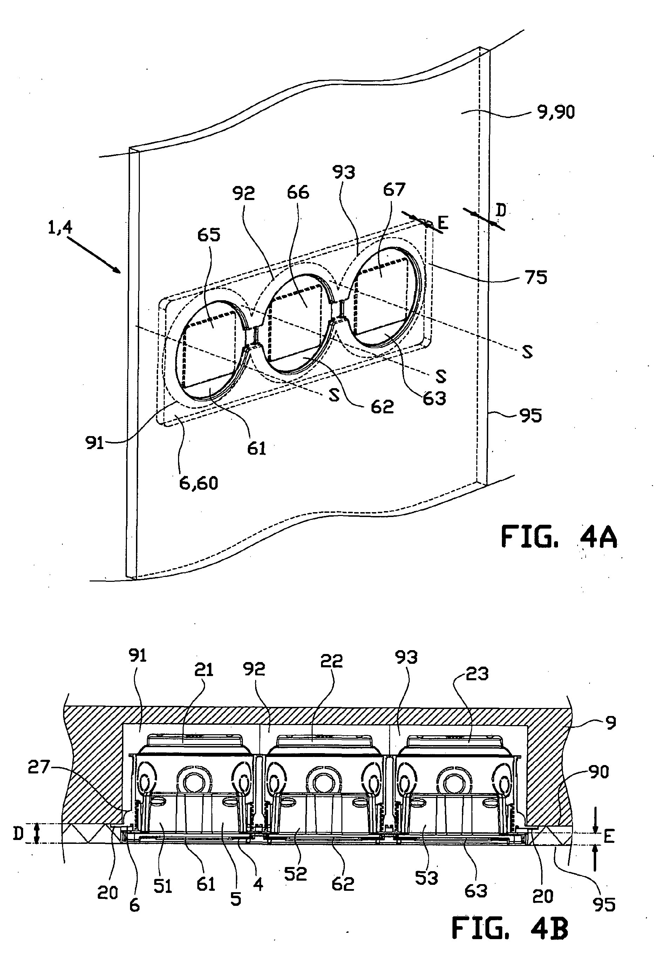

Figure 1 shows an assembly of an electric wiring 1 and an auxiliary piece 4 for building up the electric wiring 1 in a building of which only a wall 9 is shown. The wall 9 is provided with an unfinished front side 90 and three partially overlapping blind cylindrical holes 91-93 extending from the unfinished front side 90 in the wall 9. In figures 4-8 the wall 9 is provided with a finishing layer 95 in the form of plastering or stuccowork. The finishing layer 95 has a finishing layer thickness D in the range of approximately five to twelve millimetres, in some cases even twelve millimetres or more. The finishing layer thickness D among others depends on the depth with which the electric wiring 1 is arranged in the holes 91-93, the personal preference of the electrician or irregularities in the unfinished front side 90 of the wall 9.

As shown in figure 1 the electric wiring 1 in this example comprises three flush-type boxes or installation boxes 21-23 that by means of slide couplings that are known per se, are connected one to the other and that are accommodated in the holes 91-93 of the wall 9. Each of the installation boxes 21-23 is provided with a bottom wall 24 and a substantially cylindrical circumferential wall 25 that is upright from the bottom wall 24 and has a centre line S. The bottom wall 24 and the circumferential wall 25 define an installation space H for accommodation of installation material such as flush socket outlets or switches (not shown). The circumferential wall 25 has a circular circumferential edge 26 facing away from the bottom wall 24 and bounding a primary opening of the installation box 21-23.

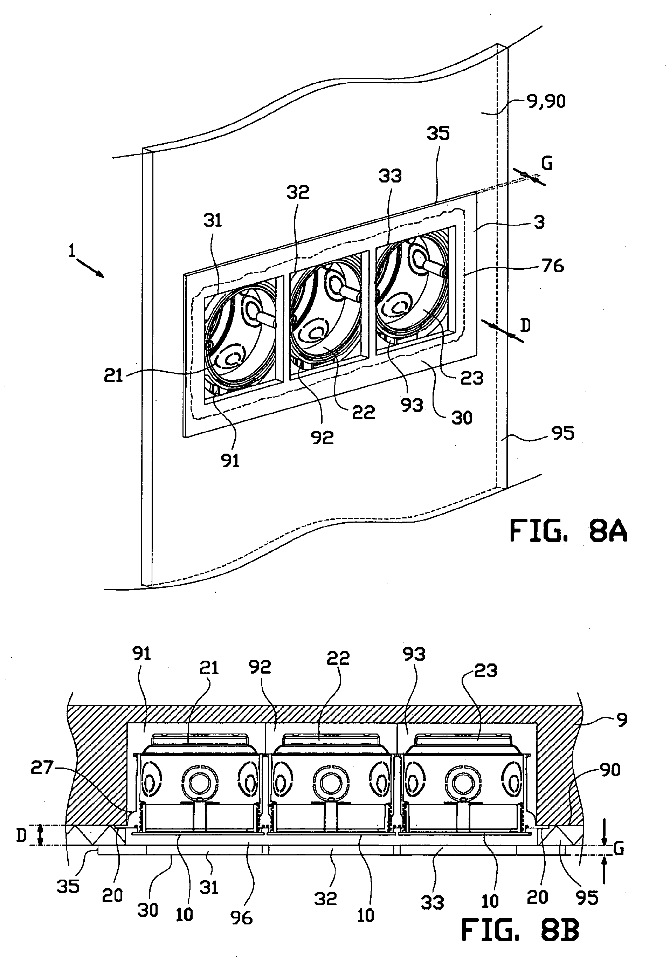

In this example each of the installation boxes is provided with an adjustable ring 27 that is disposed concentrically in the primary opening. With respect to the circumferential wall 25, the ring 27 can be rotated about the centre line S and can be moved parallel to the centre line S. The ring 27 is provided with two integrally formed bushes 28, 29 for disposing bolts or screws of the installation material therein. Of the usual installation material only the three mounting plates 10 are shown in figure 8B, with which plates the installation material can be attached to the rings 27 of the respective installation boxes 21-23 by means of the bolts or screws. In an alternative embodiment of the electric wiring that is not shown, wherein the installation boxes do not comprise a ring, the mounting plates 10 are attached to the circumferential edges 26.

Around the circumferential wall 25 the installation boxes 21-23 are provided with integrally formed groups of positioning projections, placement projections and/or alignment projections 20 in the form of ribs, strips or flaps. The groups of projections 20 are divided into groups and extend radially outward. The projections 20 are slightly flexible and are adapted for contacting or engaging onto the holes 91-93 in the wall 9 in order to temporarily position, secure and/or align the installation boxes 21-23 therein. Optionally the installation boxes 21-23 are further fixated with respect to the holes 91-93 by disposing finishing material such as plastering or stuccowork in the holes 91-93.

As is shown in figures 8A and 8B the electric wiring 1 is finally finished by means of three mounting plates 10 that are positioned entirely in the recess 96 so as to be recessed with respect to the finishing layer 95 and a front plate 3 that covers the finished front side of the wall 9. The front plate 3 is provided with a main plane 30 and a circumferential edge 35 around the main plane 30. The circumferential edge 35 has an own thickness G of a few millimetres. In the main plane 30 the front plate 3 is provided with three openings 31-33 that in the placed condition, as shown in figure 8B, are situated straight opposite the installation boxes 21-23 and share the same centre lines S. Operation elements of the installation material, such as turning knobs, tumblers or socket outlets, are mounted in the openings 31-33 of the front plate 3 and fixate the front plate 3 with its circumferential edge 35 against the front side of the finishing layer 95.

As shown in figure 1 the auxiliary piece 4 is provided with a first shell member forming an insert part 5 and a second shell member forming a clearance part 6. The insert part 5 and the clearance part 6 have been manufactured by means of thermoplastic deformation or vacuum formation of thin-walled polyethylene terephthalate (PET) or polystyrene (PS). The PET material or PS material has the advantage of adhering poorly to the finishing layer 95 as a result of which the auxiliary piece 4 can easily be removed.

The insert part 5 is provided with a rectangular rear wall 50 and three insert projections 51-53 extending from the rear wall 50. The insert projections 51-53 are situated straight opposite the installation boxes 21-23 and share the same centre lines S. The insert projections 51-53 have each been provided with a circumferential wall 56 that with respect to the centre line S is circular and slightly tapering, and a bottom wall 57 at the outer end of the circumferential wall 56 facing away from the rear wall 50. The diameter of the circumferential wall 56 is substantially equal to the inner diameter of the ring 27. The insert projections 51-53 have each been provided with four depressions 58 distributed around the perimeter of the circumferential wall 56, which depressions on the outside of the circumferential wall 56 form recesses for accommodating the bushes 28, 29 of the installation boxes 21-23 and four protuberances 59 distributed around the perimeter of the circumferential wall 56, which protuberances on the outside of the circumferential wall 56 form cams for clamping the insert projections 51-53 on the inside of the installation boxes 21-23 under the adjustable ring 27. The rear wall 50 is provided with a circular first coupling edge 54 that at the outer end facing away from the rear wall 50 is provided with a hook edge 55.

Clearance part 6 is provided with a rectangular front wall 60 and three circular breaking surfaces or break-through surfaces 61-63 situated in the front wall 60. The breaking surfaces 61-63 are slightly offset with respect to the front wall 60. The breaking surfaces 61-63 are situated straight opposite the installation boxes 21-23 and the insert projections 51-53 and share the same centre lines S. The circular perimeter of the breaking surfaces 61-63 substantially has the same diameter as the diameter of the circumferential walls 56 of the insert projections 51-53. In this example the clearance part 6 is provided with electric signal elements 65-67 with detectable antennas, for instance RFID stickers. In that way the position of the breaking surfaces 61-63 can be determined by means of a detection tool, even if they are covered by the finishing layer 95. Each of the breaking surfaces 61-63 is provided with a circular intended break connection 69-71 along the connection of the breaking surfaces 61-63 on the front wall 60. The front wall 60 is provided with a circular second coupling edge 64 extending towards the insert part 5. Relative to the front wall 60 the second coupling edge 64 is curved slightly inwards or convex.

The method for by means of the auxiliary piece 4 building up the electric wiring 1 in the wall 9 of the building will be explained below on the basis of the figures 1-8.

In figure 1 the situation is shown in which the holes 91-93 have been arranged in the unfinished front side 90 of the wall 9 of the building. The installation boxes 21-23, the insert part 5 and the clearance part 6 are aligned relative to the holes 91-93 and the centre lines S. First of all the installation boxes 21-23 are placed in the holes 91-93 in direction A parallel to the centre lines S. The circumferential edges 26 face the unfinished front side 90 of the wall 9. The positioning projections 20 abut the unfinished front side 90 of the wall 9 and prevent that the installation boxes 21-23 are slid too far into the holes 91-93. In this example the circumferential edges 26 of the installation boxes 21-23 protrude approximately six millimetres relative to the unfinished front side 90 of the wall 9. The electric wirings of the building are then pulled through into the installation boxes 21-23.

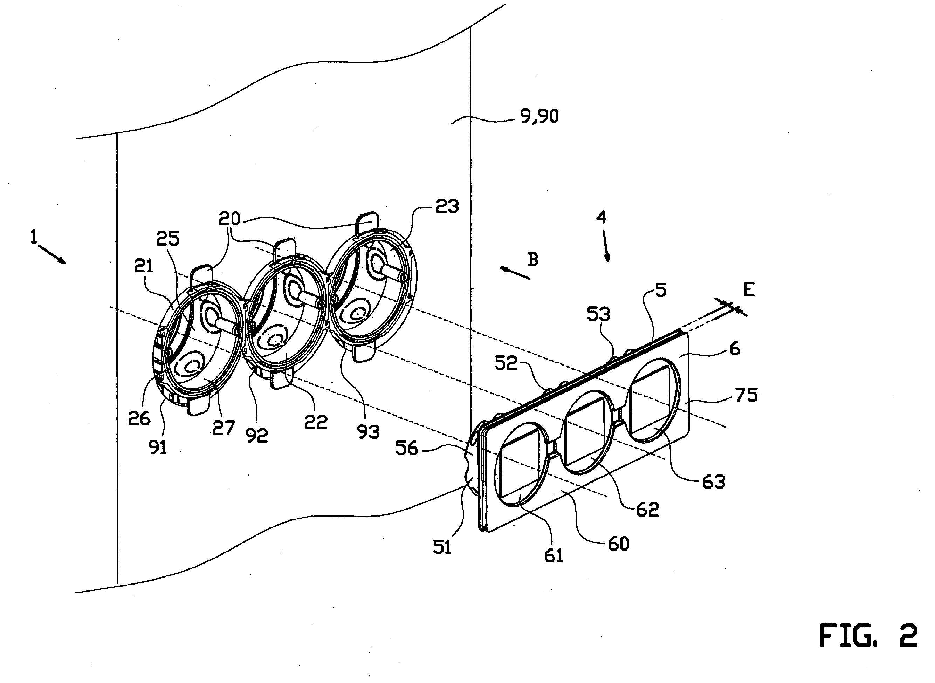

In figure 2 the situation is shown in which the installation boxes 21-23 have been disposed in the holes 91-93 in the wall 9. Insert part 5 and clearance part 6 are coupled to each other to form the auxiliary piece 4. In the coupled condition of the auxiliary piece 4 the coupling edges 54, 64 engage onto one another, wherein the hook edge 55 connects to the second coupling edge 64 in a clamping manner and keeps the insert part 5 and the clearance part 6 together. The front wall 60, the coupling edges 54, 64 and the rear wall 50 jointly form a plate-shaped body 75 including a free volume. The plate-shaped body 75 has a clearance thickness E of in this example approximately five millimetres. The auxiliary piece 4 is placed in the installation boxes 21-23 in direction B parallel to the centre lines S, wherein the insert projections 51-53 of the insert part 5 are inserted simultaneously into the primary openings of the installation boxes 21-23, which openings are situated straight opposite. The circumferential walls 56 of the insert projections 51-53 will then abut the rings 27 and/or the circumferential walls 25 of the installation boxes 21-23 in a clamping manner, wherein the protuberances 59 preferably hook behind the rings 27.

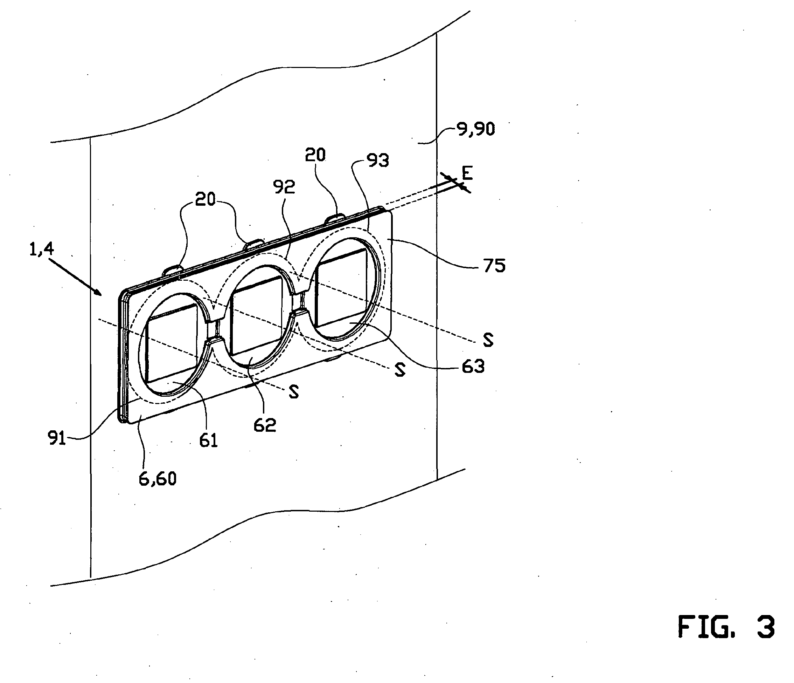

In figure 3 the situation is shown in which the auxiliary piece 4, in the manner described above, has been placed in the installation boxes 21-23. In this placed condition of the auxiliary piece 4, the insert part 5 keeps, carries or positions the clearance part 6 straight in front of the installation boxes 21-23, wherein the front surface 60 extends in front of and parallel to the unfinished front side 90 of the wall 9. The plate-shaped body 75 formed by the coupled auxiliary piece 4 substantially fully covers the installation boxes 21-23 and the holes 91-93, when considered in the direction parallel to the centre lines S. As the installation boxes 21-23 have not been fully inserted into the holes 91-93 but slightly protrude therefrom, the plate-shaped body 75 hovers a few millimetres in front of the unfinished front side 90 of the wall 9.

In figures 4A and 4B the situation is shown in which the finishing layer 95, for instance plaster material, is applied at a finishing layer thickness D of approximately eleven millimetres on the unfinished front side 90 of the wall 9. The finishing layer 95 is applied around the auxiliary piece 4 so as to butt. The auxiliary piece 4 need not deliberately be kept free from the finishing layer 95, which facilitates the work of applying the finishing layer 95. A small quantity of finishing material may end up in the space behind the plate-shaped body 75. However, this is irrelevant as the volume defined by the auxiliary piece 4 keeps the required space free. Moreover the quantity will be so small that it will not impede mounting the front plate 3 later on. In figure 4B it can be seen that in this example the finishing layer 95 is applied as a relatively thin layer over the auxiliary piece 4, so that a smooth connection to the finishing layer 95 surrounding the auxiliary piece 4 can be effected. At the location of the installation boxes 21-23, the plate-shaped body 75 keeps a free volume in the applied finishing layer 95 in front of the unfinished front side 90 of the wall 9. As the breaking surfaces 61-63 are slightly offset relative to the front wall 60, at the location of the breaking surfaces 61-63 an irregularity or a spot having a higher humidity level may occur in the finishing layer 95. This irregularity provides a visible indication of the position where the breaking surfaces 61-63 are situated underneath the finishing layer 95.

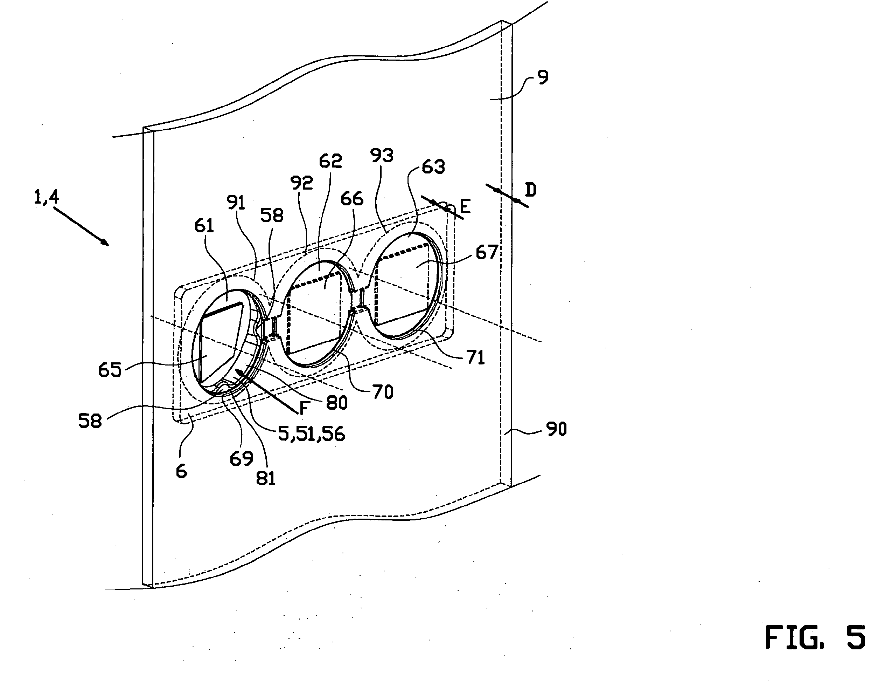

In figure 5 the situation is shown in which an electrician localises the breaking surfaces 61-63, optionally by means of a detection tool and signal elements such as RFID stickers. The electrician then exerts a pressing force F on one of the breaking surfaces 61 by means of his fingers or a tool such as a hammer. In case of sufficient pressure force F the breaking surface 61 will at least partially tear away at the location of the intended break connection 69. The breaking surface 61 can subsequently be pushed into the insert projection 51 situated behind it of the insert part 5, so that an engagement opening 80 is created in the clearance part 6 with an engagement edge 81 accessible from the front side of the auxiliary piece 4.

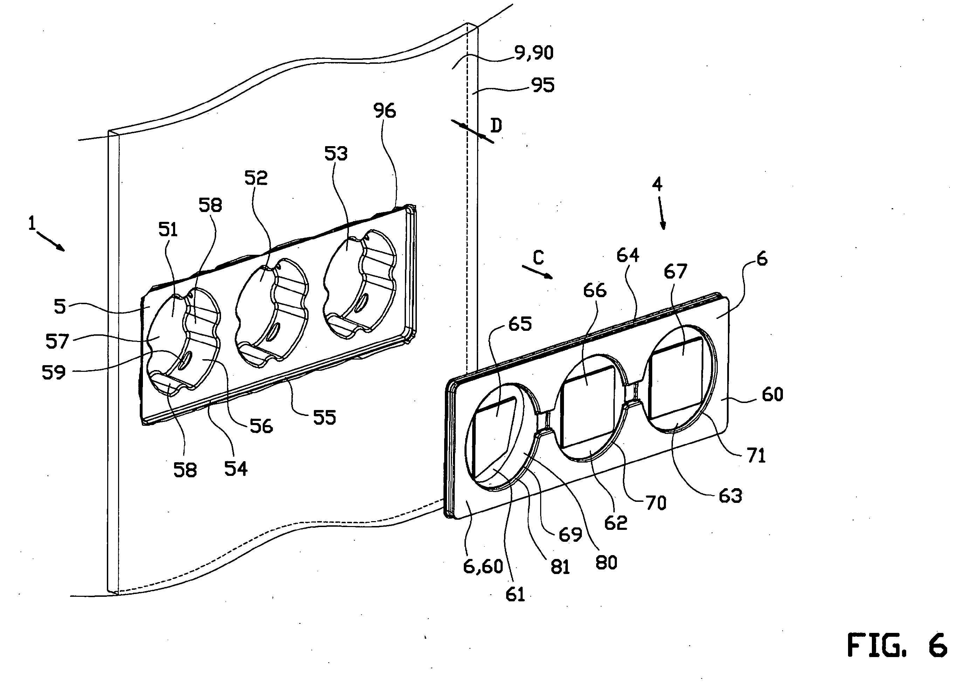

In figure 6 the situation is shown in which the electrician has engaged the engagement edge 81 and has simultaneously exerted a force in direction C on the clearance part 6 in order to prize or break the clearance part 6 free from the finishing layer 95. In this example the coupling between the coupling edges 54, 64 does not suffice to keep the insert part 5 and the clearance part 6 together, as a result of which the coupling is ended. In that way the clearance part 6 can be removed, whereas the insert part 5 is left behind in the installation boxes 21-23. In an alternative embodiment the coupling between the coupling edges 54, 64 is indeed strong enough for keeping the insert part 5 and the clearance part 6 together, as a result of which both parts 5, 6 can be taken out simultaneously.

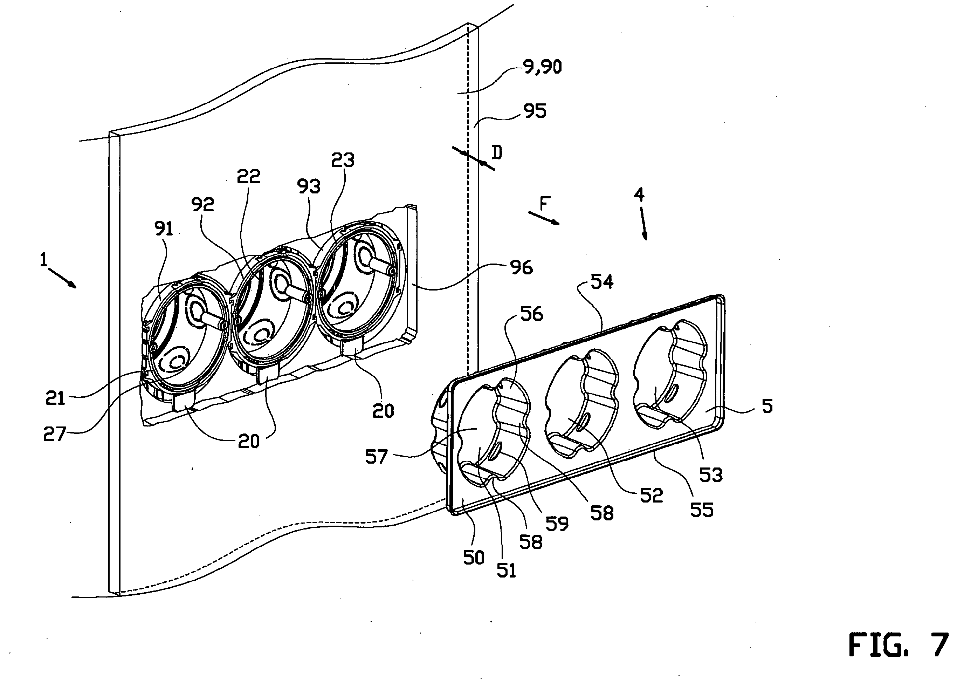

In figure 7 the situation is shown in which the electrician has engaged the insert part 5 at the location of the inner sides of the circumferential walls 56 and has pulled the insert part 5 free from the installation boxes 21-23 in direction F. The clamping abutment between the insert projections 51-53 and the installation boxes 21-23 is ended. Removal of the insert part 5 has exposed the installation boxes 21-23 situated behind it. The unfinished front side 90 of the wall 9 situated behind the insert part 5 has been substantially kept free from finishing material of the finishing layer 95 by the auxiliary piece 4. In that way a free volume or a recess 96 has been effected in the finishing layer 95 having a rectangular outer circumference that corresponds with the shape of the plate-shaped body 75. In the figures the outer circumference is shown more irregularly than it will actually be. The recess 96 has a depth corresponding with the finishing layer thickness D of approximately eleven millimetres.

In the situation according to figure 7 installation material can be disposed in the installation spaces of the installation boxes 21-23. The installation material is subsequently connected to the electric wirings of the building.

In figures 8A and 8B the situation is shown in which the front plate 3 has been mounted on the wall 9. The main plane 30 of the front plate 3 or its circumferential edge 35 abuts the finishing layer 95 surrounding the recess 96 and extends over the recess 96. Operation elements of the installation material, such as turning knobs, tumblers or socket outlets can be arranged in the openings 31-33. The front plate 3, jointly with the installation material arranged in the openings 31-33, covers the installation boxes 21-23, the holes 91-93, the mounting plates 10 and the recess 96. The recess 96 provides an installation space between the front plate 3 and the unfinished front side 90 of the wall 9 in which the electric or mechanical elements of the installation material can be accommodated.

As shown in figure 8B the installation material, of which only the mounting plate 10 is shown, is recessed relative to the finishing layer 95 in the direction of the unfinished front side 90 of the wall 9. Preferably the mounting plates 10 of the installation material are fully accommodated in the recess 96 and the installation material is at least partially accommodated in the recess 96. As the mounting plates 10 are recessed in the recess 96, the installation material protrudes less and the front plate 3 can be arranged more level or in flush mounting against the finishing layer 95. Preferably the front plate thickness G over which the front plate 3 projects relative to the finishing layer 95 is only a few millimetres, preferably less than two millimetres.

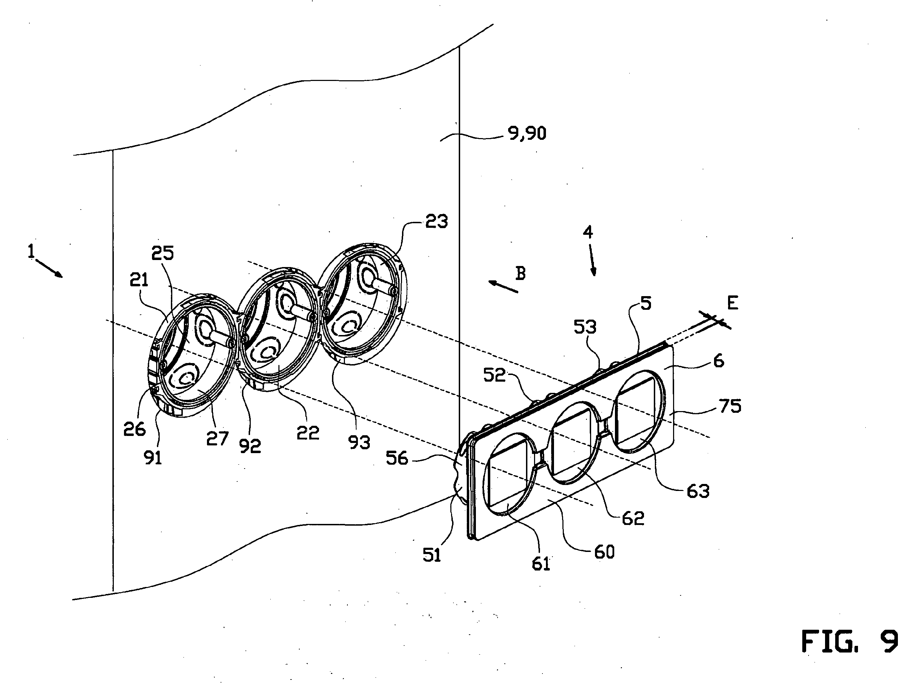

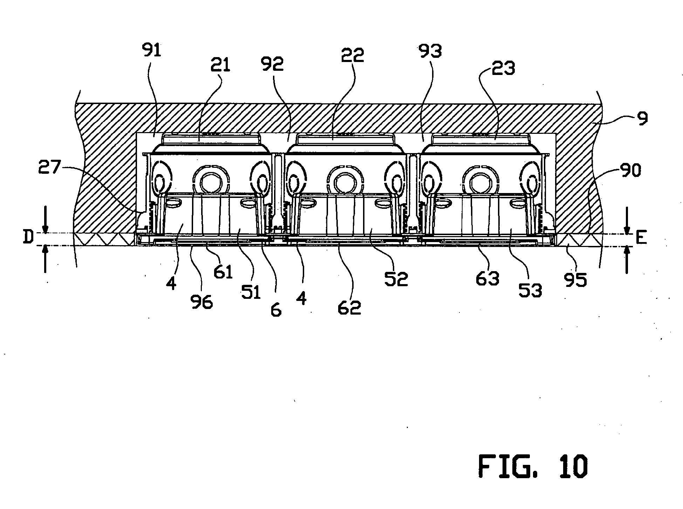

Figures 9 and 10 show a slightly deviating method of building up the electric wiring 1 in the wall 9 of the building by means of the auxiliary piece 4 according to figure 1.

The method step shown in figure 9 corresponds with the step as shown in figure 2. The situation according to figure 9, however, differs from the situation according to figure 2 in that the upper positioning projections of the installation boxes 21-23 have been broken off so that the installation boxes 21-23 can be inserted deeper into the holes 91-93. In this example the installation boxes have been inserted to a depth into the holes 91-93 wherein the circumferential edges 26 are level with the unfinished front side 90 of the wall 9. When the installation boxes 21-23 have been slid deeper into the holes 91-93, the plate-shaped body 75 will be situated closer to the unfinished front side 90 of the wall 9, and preferably abut it.

The method step shown in figure 10 corresponds with the step as shown in figures 4A and 4B. The situation according to figure 10, however, differs from the situation according to figures 4A and 4B in that due to the installation boxes 21-23 being situated deeper, the finishing layer thickness D of the finishing layer 95 can be kept thinner, for instance a finishing layer thickness D of approximately six millimetres. In this example the recess 96 kept open by the auxiliary piece 4 has a depth that corresponds with the thinner finishing layer thickness D of approximately six millimetres.

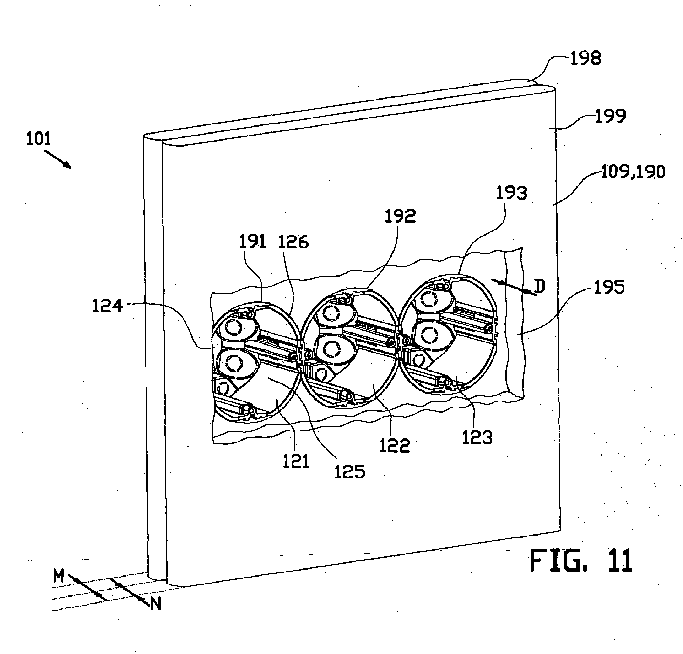

Figure 11 shows an alternative electric wiring 101 in a wall 109 of a building that is not further shown, according to a second embodiment of the invention. The wall 109 is provided with a first plate at the rear 198 and a second plate at the front 199. The plates 198, 199 are wooden boards, gypsum boards or boards of another suitable construction material. Using a cardboard template the electrician draws three partially overlapping circles and a rectangle at the location where in the next step the electrician will make three first holes 191-193 and a second hole 195. The first holes 191-193 are drilled into both plates 198, 199 after which the second hole 195 will be made in the second plate 199. The three first holes 191-193 are situated within the perimeter of the second hole 195. The first plate 198 and the second plate 199 have a first plate thickness M and a second plate thickness N, respectively, both of approximately ten millimetres.

The electric wiring 101 comprises three hollow wall boxes 121-123 having a bottom wall 124 and a circumferential wall 125 that is upright from the bottom wall 124. At the outer end facing away from the bottom wall 124, the circumferential wall 125 is provided with a circular installation edge 126. The hollow wall boxes 121-123 have been arranged in the first holes 91-193, wherein the installation edges 126 are oriented towards the second plate 199. The hollow wall boxes 121-123 are secured to the first plate 198 using fastening elements in the manner known per se. The installation edges 126 are situated around the first holes 191-193 level with or abutting the front side of the first plate 198. In the situation shown, the second hole 195 provides an installation space having a depth D at the location of the hollow wall boxes 121-123, which installation space can be used for arranging installation material so as to be recessed with respect to the second plate 199. A front plate, such as the front plate 3 shown in figures 8A and 8B, can subsequently be arranged at the location of the second hole 195 level or in flush mounting on the second plate 199, wherein the front plate covers the second hole 195 and the installation material.

The above description is included to illustrate the operation of preferred embodiments of the invention and not to limit the scope of the invention. Starting from the above explanation many variations that fall within the scope of the present invention as defined by the claims will be evident to an expert.

## Claims

1. Assembly of electric wiring (1) and an auxiliary piece (4) for building up the electric wiring in a building, wherein the building comprises a wall (9) having an unfinished front side (90) and a hole (91-93) extending from the unfinished front side in the wall, wherein the electric wiring comprises an installation box (21-23), installation material (10) and a front plate (3) for covering the installation material, wherein the installation box comprises a bottom wall (24) and a circumferential wall (25) that is upright from the bottom wall, wherein the circumferential wall comprises a circular circumferential edge (26) facing away from the bottom wall (24) and bounding a primary opening in the installation box, wherein the bottom wall (24) and the circumferential wall (25) jointly define an inner space accessible via the primary opening for accommodation of the installation material (10), wherein the installation box (91-93) in its placed condition is accommodated in the hole in the wall, wherein the unfinished front side (90) of the wall is suitable for applying a finishing layer (95) thereon, wherein the auxiliary piece (4) is provided with a plate-shaped clearance part (6) and an insert part (5) that is upright from the main plane of the clearance part, wherein the insert part (5) in the placed condition of the auxiliary piece (4) is disposed in the primary opening of the installation box, wherein the insert part (5) keeps the clearance part (6) in front of the installation box in a position in which the main plane extends in front of and parallel to the unfinished front side of the wall, wherein the clearance part (6) is adapted for keeping a free volume (96) in the finishing layer (95) to be applied, wherein after removal of the auxiliary piece the installation material (10) can be accommodated, **characterized in that** the installation material (10) is provided with a mounting plate (10) which after removal of the auxiliary piece is placed on the installation box, wherein the mounting plate (10) in the placed condition is fully accommodated in the free volume (96).

2. Assembly according to claim 1, wherein, in the placed condition of the auxiliary piece (4), the insert part (5) connects to the installation box (21-23) in a clamping manner.

3. Assembly according to claim 1 or 2, wherein the installation box (21-23) is provided with fixing bushes (29) extending inward from the circumferential wall (25) into the inner space, wherein the insert part (5) is provided with recesses (58) for accommodation of the fixing bushes (29).

4. Assembly according to any one of the preceding claims, wherein on the front side of the auxiliary piece (4) the clearance part (6) is provided with a breaking surface (61-63), wherein the breaking surface in broken condition provides an engagement opening in the clearance part with an engagement edge accessible from the front side of the auxiliary piece.

5. Assembly according to any one of the preceding claims, wherein the auxiliary piece (4) at the location of the installation box (21-23) is provided with an electric signal element.

6. Assembly according to claims 4 and 5, wherein the signal element is disposed at the location of the breaking surface (61-63).

7. Assembly according to any one of the preceding claims, wherein the clearance part (6) and the insert part (5) are individual elements of the auxiliary piece (4) that are coupled to each other by means of a coupling (54,64) that can be released, wherein the clearance part (6) and the insert part (5) preferably are hollow shell members that connect to each other, wherein the clearance part and the insert part in the coupled condition jointly form the free volume (96).

8. Assembly according to claim 7, wherein the clearance part (6) comprises a front wall (60) and a circular first coupling edge (64) facing the insert part, wherein the insert part has a rear wall (50) and a circular second coupling edge (54) facing the clearance part, wherein the coupling edges (54,64) in the coupled condition engage onto each other and wherein the front wall (60), the coupling edges (54,64) and the rear wall (50) jointly form the free volume (96).

9. Assembly according to any one of the preceding claims, wherein the clearance part (6) is substantially rectangular.

10. Assembly according to any one of the preceding claims, wherein the clearance part (6) around the hole (91-93) in the wall abuts the unfinished front side (90) of the wall.

11. Assembly according to any one of the preceding claims, wherein the clearance part (6) extends outward beyond the circumferential wall (25) of the installation box.

12. Assembly according to any one of the preceding claims, wherein the wall comprises a multiple of holes (91-93) in which a multiple of installation boxes (21-23) has been accommodated, wherein the insert part (5) comprises a multiple of insert projections (56) that in the placed condition of the auxiliary piece (4) has been disposed in the primary openings of the multiple of installation boxes.

13. Method for building up an electric wiring (1) in a building by means of an auxiliary piece (4), wherein the building comprises a wall having an unfinished front side (90) and a hole (91-93) extending from the unfinished front side in the wall, wherein the electric wiring (1) comprises an installation box (21-23), installation material (10) and a front plate (3) for covering the installation material (10), wherein the installation box (21-23) comprises a bottom wall (24) and a circumferential wall (25) that is upright from the bottom wall, wherein the circumferential wall comprises a circular circumferential edge (26) facing away from the bottom wall (24) and bounding a primary opening of the installation box, wherein the bottom wall (24) and the circumferential wall (25) jointly define an inner space accessible via the primary opening for accommodation of the installation material (10), wherein the auxiliary piece (4) is provided with a plate-shaped clearance part (6) and an insert part (5) that is upright from the main plane of the clearance part, wherein the method comprises the steps of placing the installation box (21-23) in the hole (91-93) in the wall, wherein the circumferential edge (26) faces the unfinished front side (90) of the wall, placing the insert part (5) in the primary opening of the installation box (21-23), wherein the insert part (5) keeps the clearance part (6) straight in front of the installation box in a position in which the main plane extends in front of and parallel to the unfinished front side of the wall, applying a finishing layer (95) on the unfinished front side (90) of the wall, wherein the clearance part is adapted for keeping a free volume (96) in the applied finishing layer, removing the auxiliary piece (4) from the circumferential edge (26), and placing the installation material (10) in the inner space and the free volume, **characterized in that** the installation material (10) is provided with a mounting plate (10) to be placed on the installation box (21-23), wherein the mounting plate (10) is fully accommodated in the free volume (96), and the front plate (3) is placed over the installation material (10) and the free volume (96).

## Patentansprüche

1. Anordnung einer elektrischen Verkabelung (1) und eines Hilfsstücks (4) für den Aufbau der elektrischen Verkabelung in einem Gebäude, wobei das Gebäude eine Wand (9) mit einer unvollendeten Vorderseite (90) und ein Loch (91-93), das sich von der unvollendeten Vorderseite in der Wand erstreckt, umfasst, wobei die elektrische Verkabelung einen Installationskasten (21-23), Installationsmaterial (10) und eine Frontplatte (3) zum Abdecken des Installationsmaterial umfasst, wobei der Installationskasten eine untere Wand (24) und eine umlaufende Wand (25), die senkrecht auf der unteren Wand steht, umfasst, wobei die umlaufende Wand einen kreisförmigen Umfangsrand (26) umfasst, der von der unteren Wand (24) abgewandt ist und eine Hauptöffnung in dem Installationskasten begrenzt, wobei die untere Wand (24) und die umlaufende Wand (25) gemeinsam einen Innenraum definieren, der über die Hauptöffnung zur Aufnahme des Installationsmaterial (10) zugänglich ist, wobei der Installationskasten (91-93) in seinem angeordneten Zustand in dem Loch in der Wand aufgenommen ist, wobei die unvollendete Vorderseite (90) der Wand zum Aufbringen einer Deckschicht (95) darauf geeignet ist, wobei das Hilfsstück (4) mit einem plattenartigen Abstandsteil (6) und einem Einlegeteil (5), das senkrecht auf der Hauptebene des Abstandsteils steht, versehen ist, wobei das Einlegeteil (5) im angeordneten Zustand des Hilfsstücks (4) in der Hauptöffnung des Installationskastens angeordnet ist, wobei das Einlegeteil (5) das Abstandsteil (6) vor dem Installationskasten in einer Position hält, in der die Hauptebene sich vor und parallel zu der unvollendeten Vorderseite der Wand erstreckt, wobei das Abstandsteil (6) geeignet ist, ein freies Volumen (96) in der aufzutragenden Deckschicht (95) zu behalten, wobei nach dem Entfernen des Hilfsstücks das Installationsmaterial (10) aufgenommen werden kann, **dadurch gekennzeichnet, dass** das Installationsmaterial (10) mit einer Montageplatte (10) versehen ist, die nach dem Entfernen des Hilfsstücks auf dem Installationskasten angeordnet ist, wobei die Montageplatte (10) im angeordneten Zustand vollständig in dem freien Volumen Volumen (96) aufgenommen ist.

2. Anordnung nach Anspruch 1, wobei im angeordneten Zustand des Hilfsstücks (4) das Einlegeteil (5) mit dem Installationskasten (21-23) auf klemmende Weise verbunden ist.

3. Anordnung nach Anspruch 1 oder 2, wobei der Installationskasten (21-23) mit Befestigungsbuchsen (29) versehen ist, die sich von der umlaufenden Wand (25) nach innen in den Innenraum erstrecken, wobei das Einlegeteil (5) mit Ausnehmungen (58) für die Aufnahme der Befestigungsbuchsen (29) versehen ist.

4. Anordnung nach einem der vorhergehenden Ansprüche, wobei auf der Vorderseite des Hilfsstücks (4) das Abstandsteil (6) mit einer Bruchfläche (61-63) versehen ist, wobei die Bruchfläche im gebrochenen Zustand eine Eingriffsöffnung in dem Abstandsteil mit einer Eingriffskante, die von der Vorderseite des Hilfsstücks zugänglich ist, bietet.

5. Anordnung nach einem der vorhergehenden Ansprüche, wobei das Hilfsstück (4) an der Stelle des Installationskastens (21-23) mit einem elektrischen Signalelement versehen ist.

6. Anordnung nach den Ansprüchen 4 und 5, wobei das Signalelement an der Stelle der Bruchfläche (61-63) angeordnet ist.

7. Anordnung nach einem der vorhergehenden Ansprüche, wobei das Abstandsteil (6) und das Einlegeteil (5) einzelne Elemente des Hilfsstücks (4) sind, die miteinander durch eine Verbindung (54,64), die gelöst werden kann, verbunden sind, wobei das Abstandsteil (6) und das Einlegeteil (5) vorzugsweise hohle Schalenelemente sind, die miteinander verbunden sind, wobei das Abstandsteil und das Einlegeteil im verbundenen Zustand gemeinsam das freie Volumen (96) bilden.

8. Anordnung nach Anspruch 7, wobei das Abstandsteil (6) eine Vorderwand (60) und einen kreisförmigen ersten Verbindungsrand (64) gegenüber dem Einlegeteil umfasst, wobei das Einlegeteil eine Rückwand (50) und einen kreisförmigen zweiten Verbindungsrand (54) gegenüber dem Abstandsteil aufweist, wobei die Verbindungsränder (54,64) im verbundenen Zustand ineinander greifen und wobei die Vorderwand (60), die Verbindungsränder (54,64) und die Rückwand (50) gemeinsam das freie Volumen (96) bilden.

9. Anordnung nach einem der vorhergehenden Ansprüche, wobei das Abstandsteil (6) im Wesentlichen rechteckig ist.

10. Anordnung nach einem der vorhergehenden Ansprüche, wobei das Abstandsteil (6) um das Loch (91-93) in der Wand an die unvollendete Vorderseite (90) der Wand angrenzt.

11. Anordnung nach einem der vorhergehenden Ansprüche, wobei das Abstandsteil (6) sich nach außen über die umlaufende Wand (25) des Installationskastens hinaus erstreckt.

12. Anordnung nach einem der vorhergehenden Ansprüche, wobei die Wand eine Mehrzahl von Löchern (91-93) umfasst, in denen eine Mehrzahl von Installationskästen (21-23) aufgenommen worden sind, wobei das Einlegeteil (5) eine Mehrzahl von Einlegevorsprüngen (56) umfasst, die im angeordneten Zustand des Hilfsstücks (4) in den Hauptöffnungen der Mehrzahl von Installationskästen angeordnet worden sind.

13. Verfahren zum Aufbau einer elektrischen Verkabelung (1) in einem Gebäude mittels eines Hilfsstücks (4), wobei das Gebäude eine Wand mit einer unvollendeten Vorderseite (90) und ein Loch (91-93), das sich von der unvollendeten Vorderseite in der Wand erstreckt, umfasst, wobei die elektrische Verkabelung (1) einen Installationskasten (21-23), Installationsmaterial (10) und eine Frontplatte (3) zum Abdecken des Installationsmaterials (10) umfasst, wobei der Installationskasten (21-23) eine untere Wand (24) und eine umlaufende Wand (25), die senkrecht auf der unteren Wand steht, umfasst, wobei die umlaufende Wand einen kreisförmigen Umfangsrand (26) umfasst, der von der unteren Seite (24) abgewandt ist und eine Hauptöffnung des Installationskastens begrenzt, wobei die untere Wand (24) und die umlaufende Wand (25) gemeinsam einen Innenraum definieren, der über die Hauptöffnung zur Aufnahme des Installationsmaterials (10) zugänglich ist, wobei das Hilfsstück (4) mit einem plattenartigen Abstandsteil (6) und einem Einlegeteil (5), das senkrecht auf der Hauptebene des Abstandsteils steht, versehen ist, wobei das Verfahren die folgenden Schritte umfasst: Anordnen des Installationskastens (21-23) in dem Loch (91-93) in der Wand, wobei der Umfangsrand (26) gegenüber von der unvollendeten Vorderseite (90) der Wand liegt, anordnen des Einlegeteils (5) in der Hauptöffnung des Installationskastens (21-23), wobei das Einlegeteil (5) das Abstandsteil (6) gerade vor dem Installationskasten in einer Position, in der die Hauptebene sich vor und parallel zu der unvollendeten Vorderseite der Wand erstreckt, hält, Aufbringen einer Deckschicht (95) auf der unvollendeten Vorderseite (90) der Wand, wobei das Abstandsteil geeignet ist, ein freies Volumen (96) in der aufgetragenen Deckschicht (95) zu behalten, Entfernen des Hilfsstücks (4) vom Umfangsrand (26) und Anordnen des Installationsmaterials (10) im Innenraum und im freien Volumen, **dadurch gekennzeichnet, dass** das Installationsmaterial (10) mit einer auf dem Installationskasten (21- 23) anzuordnenden Montageplatte (10) versehen ist, wobei die Montageplatte (10) vollständig in dem freien Volumen (96) aufgenommen wird und die Frontplatte (3) über dem Installationsmaterial (10) und dem freien Volumen (96) angeordnet wird.

## Revendications

1. Assemblage de câblage électrique (1) et d'une pièce auxiliaire (4) pour aménager le câblage électrique dans un bâtiment, dans lequel le bâtiment comprend une paroi (9) ayant un côté avant non fini (90) et un trou (91 à 93) s'étendant depuis le côté avant non fini dans la paroi, dans lequel le câblage électrique comprend un boîtier d'installation (21 à 23), un matériel d'installation (10) et une plaque avant (3) pour couvrir le matériel d'installation, dans lequel le boîtier d'installation comprend une paroi inférieure (24) et une paroi circonférentielle (25) qui est verticale à partir de la paroi inférieure, dans lequel la paroi circonférentielle comprend un bord circonférentiel circulaire (26) orienté à l'opposé de la paroi inférieure (24) et délimitant une ouverture principale dans le boîtier d'installation, dans lequel la paroi inférieure (24) et la paroi circonférentielle (25) définissent conjointement un espace intérieur accessible via l'ouverture principale pour loger le matériel d'installation (10), dans lequel le boîtier d'installation (91 à 93) dans son état mis en place est logé dans le trou de la paroi, dans lequel le côté avant non fini (90) de la paroi est approprié pour y appliquer une couche de finition (95), dans lequel la pièce auxiliaire (4) est pourvue d'une partie de débattement en forme de plaque (6) et d'une partie d'insert (5) qui est verticale à partir du plan principal de la partie de débattement, dans lequel la partie d'insert (5) dans l'état mis en place de la pièce auxiliaire (4) est disposée dans l'ouverture principale du boîtier d'installation, dans lequel la partie d'insert (5) maintient la partie de débattement (6) devant le boîtier d'installation dans une position dans laquelle le plan principal s'étend devant et parallèle au côté avant non fini de la paroi, dans lequel la partie de débattement (6) est adaptée pour conserver un volume libre (96) dans la couche de finition (95) à appliquer, dans lequel après retrait de la pièce auxiliaire, le matériel d'installation (10) peut être logé, **caractérisé en ce que** le matériel d'installation (10) est pourvu d'une plaque de montage (10) qui, après retrait de la pièce auxiliaire, est mise en place sur le boîtier d'installation, dans lequel la plaque de montage (10) dans l'état mis en place est logée totalement dans le volume libre (96).

2. Assemblage selon la revendication 1, dans lequel, dans l'état mis en place de la pièce auxiliaire (4), la partie d'insert (5) se raccorde au boîtier d'installation (21 à 23) de manière serrée.

3. Assemblage selon la revendication 1 ou 2, dans lequel le boîtier d'installation (21 à 23) est pourvu de douilles de fixation (29) s'étendant vers l'intérieur depuis la paroi circonférentielle (25) dans l'espace intérieur, dans lequel la partie d'insert (5) est pourvue d'évidements (58) pour loger les douilles de fixation (29).

4. Assemblage selon l'une quelconque des revendications précédentes, dans lequel, sur le côté avant de la pièce auxiliaire (4), la partie de débattement (6) est pourvue d'une surface de rupture (61 à 63), dans lequel la surface de rupture dans un état rompu confère une ouverture d'enclenchement dans la partie de débattement avec un bord d'enclenchement accessible depuis le côté avant de la pièce auxiliaire.

5. Assemblage selon l'une quelconque des revendications précédentes, dans lequel la pièce auxiliaire (4) au niveau de l'emplacement du boîtier d'installation (21 à 23) est pourvue d'un élément de signal électrique.

6. Assemblage selon les revendications 4 et 5, dans lequel l'élément de signal est disposé au niveau de l'emplacement de la surface de rupture (61 à 63).

7. Assemblage selon l'une quelconque des revendications précédentes, dans lequel la partie de débattement (6) et la partie d'insert (5) sont des éléments individuels de la pièce auxiliaire (4) qui sont couplés l'un à l'autre au moyen d'un couplage (54, 64) qui peut être libéré, dans lequel la partie de débattement (6) et la partie d'insert (5) sont de préférence des organes d'enveloppe creuse qui se raccordent l'un à l'autre, dans lequel la partie de débattement et la partie d'insert dans l'état couplé forment conjointement le volume libre (96).

8. Assemblage selon la revendication 7, dans lequel la partie de débattement (6) comprend une paroi avant (60) et un premier bord de couplage circulaire (64) faisant face à la partie d'insert, dans lequel la partie d'insert a une paroi arrière (50) et un second bord de couplage circulaire (54) faisant face à la partie de débattement, dans lequel les bords de couplage (54, 64) dans l'état couplé s'enclenchent l'un sur l'autre et dans lequel la paroi avant (60), les bords de couplage (54, 64) et la paroi arrière (50) forment conjointement le volume libre (96).

9. Assemblage selon l'une quelconque des revendications précédentes, dans lequel la partie de débattement (6) est sensiblement rectangulaire.

10. Assemblage selon l'une quelconque des revendications précédentes, dans lequel la partie de débattement (6) autour du trou (91 à 93) dans la paroi est contiguë au côté avant non fini (90) de la paroi.

11. Assemblage selon l'une quelconque des revendications précédentes, dans lequel la partie de débattement (6) s'étend vers l'extérieur au-delà de la paroi circonférentielle (25) du boîtier d'installation.

12. Assemblage selon l'une quelconque des revendications précédentes, dans lequel la paroi comprend une multitude de trous (91 à 93) dans lesquels une multitude de boîtiers d'installation (21 à 23) ont été logés, dans lequel la partie d'insert (5) comprend une multitude de protubérances d'insert (56) qui, dans l'état mis en place de la pièce auxiliaire (4), ont été disposées dans les ouvertures principales de la multitude de boîtiers d'installation.

13. Procédé d'aménagement d'un câblage électrique (1) dans un bâtiment au moyen d'une pièce auxiliaire (4), dans lequel le bâtiment comprend une paroi ayant un côté avant non fini (90) et un trou (91 à 93) s'étendant depuis le côté avant non fini dans la paroi, dans lequel le câblage électrique comprend un boîtier d'installation (21 à 23), un matériel d'installation (10) et une plaque avant (3) pour couvrir le matériel d'installation (10), dans lequel le boîtier d'installation (21 à 23) comprend une paroi inférieure (24) et une paroi circonférentielle (25) qui est verticale à partir de la paroi inférieure, dans lequel la paroi circonférentielle comprend un bord circonférentiel circulaire (26) orienté à l'opposé de la paroi inférieure (24) et délimitant une ouverture principale du boîtier d'installation, dans lequel la paroi inférieure (24) et la paroi circonférentielle (25) définissent conjointement un espace intérieur accessible via l'ouverture principale pour loger le matériel d'installation (10), dans lequel la pièce auxiliaire (4) est pourvue d'une partie de débattement en forme de plaque (6) et d'une partie d'insert (5) qui est verticale à partir du plan principal de la partie de débattement, dans lequel le procédé comprend les étapes de mise en place du boîtier d'installation (21 à 23) dans le trou (91 à 93) dans la paroi, dans lequel le bord circonférentiel (26) fait face au côté avant non fini (90) de la paroi, de mise en place de la partie d'insert (5) dans l'ouverture principale du boîtier d'installation (21 à 23), dans lequel la partie d'insert (5) maintient la partie de débattement (6) droite devant le boîtier d'installation dans une position dans laquelle le plan principal s'étend devant et parallèle au côté avant non fini de la paroi, d'application d'une couche de finition (95) sur le côté avant non fini (90) de la paroi, dans lequel la partie de débattement est adaptée pour conserver un volume libre (96) dans la couche de finition appliquée, de retrait de la pièce auxiliaire (4) depuis le bord circonférentiel (26), et de mise en place du matériel d'installation (10) dans l'espace intérieur et le volume libre, **caractérisé en ce que** le matériel d'installation (10) est pourvu d'une plaque de montage (10) à mettre en place sur le boîtier d'installation (21 à 23), dans lequel la plaque de montage (10) est logée totalement dans le volume libre (96), et la plaque avant (3) est mise en place sur le matériel d'installation (10) et le volume libre (96).
